# EUROPEAN PATENT APPLICATION

(11) **EP 3 824 739 A1**
(43) Date of publication of application: **26.05.2021**
(21) Application number: 19838536.1
(22) Date of filing: 26.04.2019
(51) Int. Cl.: A23L 2/00, A23L 2/56

(54) **CARBONATED BEVERAGE**

(30) Priority: 20.07.2018 JP 2018137195
(71) Applicant: Suntory Holdings Limited, Osaka 530-8203 (JP)
(72) Inventor: YASUI, Yohei, Kawasaki-shi, Kanagawa 211-0067 (JP); MURAZUMI, Koki, Kawasaki-shi, Kanagawa 211-0067 (JP); IBUSUKI, Daigo, Kawasaki-shi, Kanagawa 211-0067 (JP)
(74) Representative: Vossius & Partner Patentanwälte Rechtsanwälte mbB
(86) International application number: PCT/JP2019/017856
(87) International publication number: WO 2020/017126

(57) **Abstract**

The present invention has as its object to provide a carbonated beverage providing a continuous feeling of a refreshing sensation originating from a flavorant.

5 to 80 mg/100 mL of caffeine, and 5 to 100 ppm of an iso-α-acid and/or 5 to 100 ppb of quassin are incorporated in a flavorant-containing carbonated beverage.

## Description

### TECHNICAL FIELD

The present invention relates to carbonated beverages containing a flavorant, and more particularly to carbonated beverages providing a continuous feeling of a refreshing sensation originating from a flavorant.

### BACKGROUND ART

Carbonated beverages are characterized by having a strong stimulating sensation, and are popular beverages in the market. When a flavorant having a refreshing sensation is incorporated in a carbonated beverage, a refreshing clean flavor can be added to the carbonated beverage, thus creating an easy-to-drink beverage loved by many people from children to adults.

Caffeine, iso-α-acids, and quassin are known as bitter components. Caffeine is typically found in coffee and green tea. It is known that the main effect of caffeine is increasing alertness -- this component is able to reduce sleepiness during the day and to sharpen concentration. Iso-α-acids are derived from hops, an ingredient used in brewing beer, and are converted from α-acids by isomerization. Quassin is a bitter principle found in Jamaica quassia extracts.

It has hitherto been reported that when bitter components such as caffeine and quassin are incorporated in a carbonated beverage with low sweetness intensity in accordance with the specified requirements, a carbonation sensation felt during drinking is enhanced (PTL 1). It was also reported that when caffeine is incorporated in combination with catechins into a carbonated beverage containing an acidifier, a stimulating acid taste of the carbonated beverage is reduced and also a body sensation of the beverage is enhanced (PTL 2). Further, it was reported that when an iso-α-acid and quassin are added to a beverage containing a high-intensity sweetener, the taste quality of the high-intensity sweetener can be improved (PTL 3).

### CITATION LIST

### PATENT LITERATURES

PTL 1: Japanese Unexamined Patent Application Publication No. JP 2017-104046
PTL 2: Japanese Unexamined Patent Application Publication No. JP 2011-182683
PTL 3: Japanese Unexamined Patent Application Publication No. JP 2012-16350

### SUMMARY OF INVENTION

### TECHNICAL PROBLEM

The present inventors found out that when a carbonated beverage incorporating a flavorant comprising an aroma component with a refreshing sensation is drunk, there occurs a problem in that the refreshing sensation originating from the flavorant is felt at the moment the carbonated beverage is put into the mouth, but this sensation does not last long and disappears in a short time due to the acid taste of the carbonated beverage and the crispness of carbonation. Thus, the present invention has as its object to provide a carbonated beverage providing a continuous feeling of a refreshing sensation originating from a flavorant.

### SOLUTION TO PROBLEM

The present inventors have made intensive studies for achieving the aforementioned object, and as a result found that incorporating caffeine in combination with an iso-α-acid or quassin into a carbonated beverage produces a particularly superior effect on a continuous feeling of a refreshing sensation originating from a flavorant. Based on this finding, the inventors completed the present invention.

The present invention is directed, but not limited, to the following.
(1) A flavorant-containing carbonated beverage comprising:
   (a) 5 to 80 mg/100 mL of caffeine, and
   (b) 5 to 100 ppm of an iso-α-acid and/or 5 to 100 ppb of quassin.
(2) The carbonated beverage as set forth in (1), wherein the flavorant comprises at least one component selected from the group consisting of linalool, limonene, α-terpineol, n-octanal, ethyl butyrate, ethyl isovalerate, isoamyl acetate and isoamyl butyrate.
(3) The carbonated beverage as set forth in (1) or (2), wherein the carbonated beverage has a caffeine content of 10 to 45 mg/100 mL.
(4) The carbonated beverage as set forth in any one of (1) to (3), wherein the carbonated beverage has an iso-α-acid content of 10 to 60 ppm.
(5) The carbonated beverage as set forth in any one of (1) to (4), wherein the carbonated beverage has a quassin content of 14 to 50 ppb.
(6) The carbonated beverage as set forth in any one of (1) to (5), wherein the carbonated beverage has an acidity of 0.02 to 1 g/100 g.
(7) The carbonated beverage as set forth in any one of (1) to (6), wherein the carbonated beverage has a Brix of 1 to 20.
(8) The carbonated beverage as set forth in any one of (1) to (7), further comprising 0.1 to 100 mg/100 mL of a mineral.
(9) The carbonated beverage as set forth in any one of (1) to (8), wherein the carbonated beverage is a packaged beverage.

### ADVANTAGEOUS EFFECTS OF INVENTION

According to the present invention, there can be provided a carbonated beverage providing a continuous feeling of a refreshing sensation originating from a flavorant.

### DESCRIPTION OF EMBODIMENTS

Hereunder, the beverage of the present invention will be described. Unless otherwise specified, the terms "ppm" and "ppb" as used herein refer to ppm and ppb on a weight-per-volume (w/v) basis.

One aspect of the present invention is a flavorant-containing carbonated beverage comprising:
(a) 5 to 80 mg/100 mL of caffeine, and
(b) 5 to 100 ppm of an iso-α-acid and/or 5 to 100 ppb of quassin. The carbonated beverage of this invention can provide a continuous feeling of a refreshing sensation originating from a flavorant. As referred to herein, the "refreshing sensation" refers to a sense of feeling a refreshing clean flavor.

### (Flavorant)

The carbonated beverage of the present invention comprises a flavorant. As referred to herein, the ""flavorant" refers to a substance capable of adding an aroma and/or flavor to a beverage of interest. In particular, in this invention, a flavorant capable of adding a refreshing sensation is preferred, and a flavorant comprising an aroma component with a refreshing sensation is preferred.

The flavorant used in the present invention preferably comprises a terpene-based compound and/or an ester-based compound as an aroma component. Preferred examples of terpene-based compounds include linalool, limonene, α-terpineol, and octanal, but other terpene-based compounds may be contained in the flavorant of this invention. Preferred examples of ester-based compounds include ethyl isovalerate, isoamyl acetate, isoamyl butyrate, and ethyl butyrate, but other ester-based compounds may be contained in the flavorant of this invention. In the flavorant of this invention, one type of the aforementioned aroma components may be contained alone, two or more, three or more, or four or more types of them may be contained in combination. Since the flavorant is contained in the carbonated beverage of this invention, such an aroma component as mentioned above, which is contained in the flavorant, can also be regarded as being present in the carbonated beverage of this invention.

The content of linalool, limonene, α-terpineol, n-octanal, ethyl butyrate, ethyl isovalerate, isoamyl acetate or isoamyl butyrate in the flavorant or in the carbonated beverage of the present invention is not particularly limited. With regard to the concentrations of such aroma components in the carbonated beverage of this invention, linalool can be present at a concentration of, for example, from 0.01 to 100000 ppb, preferably from 0.1 to 50000 ppb, more preferably from 1 to 10000 ppb. Limonene can be present at a concentration of, for example, from 0.01 to 5000000 ppb, preferably from 0.1 to 2500000 ppb, more preferably from I to 1000000 ppb. α-Terpineol can be present at a concentration of, for example, from 0.01 to 1000000 ppb, preferably from 0.1 to 100000 ppb, more preferably from 1 to 10000 ppb. n-Octanal can be present at a concentration of, for example, from 0.001 to 10000000 ppb, preferably from 0.01 to 1000000 ppb, more preferably from 0.1 to 100000 ppb. Ethyl butyrate can be present at a concentration of, for example, from 0.01 to 100000 ppb, preferably from 0.1 to 50000 ppb, more preferably from 1 to 10000 ppb. Ethyl isovalerate can be present at a concentration of, for example, from 0.01 to 1000000 ppb, preferably from 0.1 to 100000 ppb, more preferably from 1 to 10000 ppb. Isoamyl acetate can be present at a concentration of, for example, from 0.001 to 10000000 ppb, preferably from 0.01 to 1000000 ppb, more preferably from 0.1 to 100000 ppb. Isoamyl butyrate can be present at a concentration of, for example, from 0.001 to 10000000 ppb, preferably from 0.01 to 1000000 ppb, more preferably from 0.1 to 100000 ppb. The content of a flavorant in the carbonated beverage of this invention is also not particularly limited, and can be adjusted to ensure that the concentration of linalool, limonene, α-terpineol, n-octanal, ethyl butyrate, ethyl isovalerate, isoamyl acetate or isoamyl butyrate in the carbonated beverage falls within such a range as mentioned above.

The contents of linalool, limonene, α-terpineol, n-octanal, ethyl butyrate. ethyl isovalerate, isoamyl acetate and isoamyl butyrate in the carbonated beverage of the present invention can be measured using a known technique such as gas chromatography/mass spectroscopy (GC/MS).

The flavorant used in the present invention is preferably, but not particularly limited to, a citrus-based flavorant. from the viewpoint of addition of a refreshing sensation. As referred to herein, the citrus-based flavorant refers to a flavorant composition capable of adding a citrus fruit like aroma or flavor to a beverage of interest. In this invention, the citrus-based flavorant is not particularly limited, but is exemplified by a lemon flavorant, a grapefruit flavorant, an orange flavorant, a lime flavorant, a *Citrus depressa* flavorant, a *Citrus junos* flavorant, a *Citrus sudachi* flavorant, and a *Citrus sphaerocarpa* flavorant. In this invention, the citrus-based flavorant is preferably a lemon flavorant, a grapefruit flavorant, or an orange flavorant. In the carbonated beverage of the present invention, one type of citrus-based flavorant may be contained alone, two or more, three or more, or four or more types of citrus-based flavorants may be contained in combination.

The flavorant used in the present invention may also be any other fruit flavorant than citrus-based flavorants. A mixed fruit flavorant made with a combination of two or more type of fruits is also one example of the flavorant used in this invention. In the carbonated beverage of this invention, one type of fruit flavorant may be contained alone, two or more, three or more, or four or more types of fruit flavorants may be contained in combination. The flavorant used in this invention may also be any other flavorant than fruit flavorants. Among mixed fruit flavorants, those made using a citrus as at least one of the fruits to be combined are included in the scope of citrus-based flavorants.

### (Caffeine)

The carbonated beverage of the present invention is characterized by comprising a specified amount of caffeine. The content of caffeine in the carbonated beverage of this invention is in the range of from 5 to 80 mg/100 mL. The caffeine content in the carbonated beverage of this invention is preferably not less than 8 mg/100 mL, more preferably not less than 10 mg/100 mL, and is preferably not more than 45 mg/100 mL, more preferably not more than 33 mg/100 mL. When the caffeine content falls within the aforementioned range, the effects of this invention can be adequately exhibited. An excessively high caffeine content tends to have an adverse effect on the aroma of the beverage. For example, when the caffeine content increases above 150 mg/100 mL, the beverage may taste too bitter and become unfit for drinking. Typically, the caffeine content in the carbonated beverage of this invention is in the range of preferably from 8 to 45 mg/100 mL, more preferably from 10 to 33 mg/100 mL. When caffeine is present in the form of a hydrate or the like, the caffeine content shall be calculated in terms of its free form. The caffeine content can be measured and quantified by a method using high performance liquid chromatography (HPLC).

In the present invention, caffeine can be used in the form of a food additive, or in the form of an extract from a caffeine-containing plant (*e.g*., tea leaf, cola nut, coffee bean) or a concentrate thereof. In the carbonated beverage of this invention, caffeine is used in the form of preferably a commercially available product pursuant to the food additive standard, especially preferably a pure product (*i.e.,* a purified product containing at least 98% caffeine).

### (Iso-α-acid, quassin)

The carbonated beverage of the present invention is characterized by comprising a specified amount of an iso-α-acid and/or quassin. Iso-α-acids are compounds formed by isomerization of α-acids, which are hop-derived bitter components, and are also called iso-humulones. When an iso-α-acid is used in this invention, the content of the iso-α-acid in the carbonated beverage of this invention is in the range of from 5 to 100 ppm. The iso-α-acid content in the carbonated beverage of this invention is preferably not less than 6 ppm, more preferably not less than 8 ppm, still more preferably not less than 10 ppm, and is preferably not more than 60 ppm, more preferably not more than 40 ppm. still more preferably not more than 30 ppm. When the iso-α-acid content falls within the aforementioned range, the effects of this invention can be adequately exhibited. Typically, the iso-α-acid content in the carbonated beverage of this invention is in the range of preferably from 6 to 60 ppm, more preferably from 8 to 40 ppm, still more preferably from 10 to 30 ppm.

The iso-α-acid content in the carbonated beverage of this invention can be measured according to Method 7.7 as described in *Analytica-EBC* published by EBC (European Brewery Convention).

The iso-α-acid contained in the carbonated beverage of the present invention may be in the form of an extract from hops or a commercially available iso-α-acid preparation. Examples of commercially available iso-α-acid preparations include ISOHOP (produced by John I. Haas, Inc.). Any hop extraction means can be used without limitation as long as it is a known technique.

Quassin is represented by the molecular formula C₂₂H₂₈O₆, and called in Japanese in different ways. Quassin is known as one of bitter components found in Jamaica quassia (*Quassia excelsa* SW.) extracts. Jamaica quassia extracts, also called quassia extracts or quassia, are obtained by extracting the branch or bark of *Quassia excelsa* SW. of the *Simaroubaceae* family with water. When quassin is used in the present invention, the content of quassin in the carbonated beverage of this invention is in the range of from 5 to 100 ppb. The quassin content in the carbonated beverage of this invention is preferably not less than 8 ppb, more preferably not less than 12 ppb, still more preferably not less than 14 ppb, and is preferably not more than 50 ppb, more preferably not more than 40 ppb, still more preferably not more than 20 ppb. When the quassin content falls within the aforementioned range, the effects of this invention can be adequately exhibited. Typically, the quassin content in the carbonated beverage of this invention is in the range of preferably from 8 to 50 ppb, more preferably from 12 to 40 ppb, still more preferably from 14 to 20 ppb.

The quassin content in the carbonated beverage of the present invention can be measured by LC-MS (liquid chromatography-mass spectrometry).

The carbonated beverage of the present invention may comprise both an iso-α-acid and quassin at the concentration specified above. It is expected that incorporation of both an iso-α-acid and quassin enhances a continuous feeling of a refreshing sensation originating from a flavorant.

### (Carbonated beverage)

The carbonated beverage of the present invention is a beverage containing a carbon dioxide gas. The carbon dioxide gas can be introduced into a beverage using any method known to skilled artisans. For example, but without limitation, carbon dioxide can be dissolved in a beverage under pressure, or carbon dioxide and a beverage can be mixed together in pipes using a mixer such as carbonator. Alternatively, a beverage can be sprayed into a tank filled with carbon dioxide to allow the beverage to absorb carbon dioxide, or a beverage can be mixed with carbonated water.

The carbon dioxide gas pressure in the carbonated beverage of the present invention is not particularly limited, and can be in the range of, for example, from 1.0 to 5.0 kgf/cm², preferably from 1.5 to 4.0 kgf/cm², more preferably from 2.0 to 3.5 kgf/cm², at a temperature of 20°C. In this invention, the carbon dioxide gas pressure in the carbonated beverage can be measured using, for example, GVA-500A, a gas volume analyzer produced by Kyoto Electronics Manufacturing Co., Ltd. With the sample temperature being adjusted to 20°C, a packaged beverage placed in the aforementioned gas volume analyzer is subjected to gas venting (snifting) and shaking, and then measured for carbon dioxide gas pressure.

The carbonated beverage of the present invention can be, for example, a non-alcoholic beverage, an alcoholic beverage, or the like, but is preferably a non-alcoholic beverage. As referred to herein, the non-alcoholic beverage refers to a beverage having an ethanol content of less than 1% by volume (v/v). Examples of non-alcoholic beverages include various soft drinks, including energy drinks, cola beverages, ginger ale, carbonated water, sparkling beverages, soda pops, fruit juice-containing carbonated beverages, and beer-flavored beverages, with energy drinks and cola beverages being preferred, and energy drinks being particularly preferred. It is preferable that the carbonated beverage of this invention should not be a beer-flavored beverage, since the effects of this invention may be masked by the kokumi taste characteristic of beer.

### (Acidity)

The acidity of the carbonated beverage of the present invention is not particularly limited, and is in the range of, for example, from 0.02 to 1.00 mg/100 g, preferably from 0.10 to 0.7 g/100 g, more preferably from 0.15 to 0.35 g/100 g. If the acidity exceeds 1.00g/100 g, the beverage will taste too acidic and become uncomfortable to drink. In contrast, if the acidity falls below 0.02 g/100 g, the refreshing sensation felt during drinking will be faint, making it difficult to feel the effect of this invention.

The acidity as used herein is a value serving as an index for acid content, and can be determined by calculation based on the amount of an alkali, such as sodium hydroxide, required for neutralizing a certain amount of a beverage (sample) with the alkali (to pH 7.0). Acidity measurement can be conducted using an automatic titrator (*e.g*., Mettler Toledo DL50). In this invention, the acidity is expressed using a value calculated in terms of citric acid content (*i.e.,* calculated from said alkali amount required for neutralization based on the assumption that the acid contained in a beverage is exclusively citric acid).

The acidity of the carbonated beverage of the present invention can be adjusted using any type of acid. The acidity of the carbonated beverage can be adjusted using, for example, without limitation, citric acid, phosphoric acid, tartaric acid, malic acid, oxalic acid, gluconic acid, ascorbic acid, succinic acid, lactic acid, acetic acid, sulfuric acid, hydrochloric acid, fumaric acid, phytic acid, itaconic acid, or any other types of acids. Also, in this invention, the acidity can be adjusted using a fruit juice (either of clear and cloudy fruit juices will do), an acidulant pursuant to the food additive standard, or the like.

### (Brix)

The Brix of the carbonated beverage of the present invention is not particularly limited, and is in the range of, for example, from 1 to 20, preferably from 3 to 15, more preferably from 5 to 12. The Brix is a value obtained by converting a refractive index measured at 20°C using a sugar content meter, refractometer, etc. into a mass/mass percentage of sucrose in solution based on the conversion table published by ICUMSA (the International Commission for Uniform Methods of Sugar Analysis), and represents the concentration of soluble solids in solution. The Brix is expressed in unit of "°Bx", "%" or "degree". A low Brix value of a beverage indicates a low concentration of soluble solids including carbohydrate.

### (Mineral)

The carbonated beverage of the present invention may contain, without limitation, a mineral. By incorporating a mineral into the carbonated beverage of this invention, the carbonated beverage can serve as a rehydration beverage consumed in summer or while doing sports. For such a purpose, by adjusting the concentration of a mineral to be within an appropriate range, the beverage of this invention can be provided as a beverage for supplementing minerals lost during sweating. Examples of minerals include, but are not limited to, sodium, potassium, magnesium, calcium, and iron. Such a mineral can be added to the carbonated beverage of this invention in the form of a salt that can be used in foods and beverages, or in the form of deep ocean water, seaweed essence, or the like which are rich in such minerals. In the carbonated beverage of this invention, one type of mineral can be used alone, or two or more types of minerals can be used in combination. The mineral used in the carbonated beverage of this invention is preferably sodium.

The content of a mineral in the carbonated beverage of the present invention is not particularly limited, and is in the range of, for example, from 0.1 to 100 mg/100 mL, preferably from 1 to 80 mg/100 mL, more preferably from 5 to 60 mg/100 mL. When a mineral is used in the form of a salt, the content of the mineral shall be calculated in terms of its free form. The concentration of a mineral in the carbonated beverage of this invention can be measured by a method known to skilled artisans using an inductively coupled plasma (ICP)-atomic emission spectrometer (ICP-AES).

### (Other components)

Like common beverages, the carbonated beverage of the present invention may have any of various additives and other components added thereto, to the extent that such additives do not interfere with the effects of this invention. Examples of such additives include, but are not limited to, sugars (*e.g*., glucose, fructose, sucrose), enrichments (*e.g*., vitamins), antioxidants, emulsifiers, preservatives, essences, dietary fibers, pH adjustors, and quality stabilizers.

### (pH)

The pH of the carbonated beverage of the present invention is not particularly limited, and is in the range of, for example, from pH 2 to 8, preferably from pH 2.5 to 7, more preferably from pH 3 to 6. Examples of pH adjustors include, but are not limited to, trisodium citrate, sodium carbonate, sodium hydrogen carbonate, disodium hydrogen phosphate, and potassium carbonate, with trisodium citrate being particularly most preferred in this invention.

### (Packaged beverage)

The carbonated beverage of the present invention can be made into a packaged beverage. It is advantageous to provide the carbonated beverage as a packaged beverage since the packaged beverage can be stably stored for a long time. The package used for a packaged beverage is not particularly limited, and can be any of commonly used packages, such as metal package, resin package, paper package, and glass package. Specific examples thereof include metal packages such as aluminum and steel cans, resin packages such as PET bottle, paper packages such as paper pack, and glass packages such as glass bottle.

The carbonated beverage of the present invention may or may not be heat sterilized, but is preferably heat sterilized. When the carbonated beverage of this invention is heat sterilized, the heat sterilization method is not particularly limited, and any known method can be used. For example, a heat sterilized, packaged beverage can be produced by a method that involves performing heat sterilization after a carbonated beverage or a pre-carbonated beverage is packed in a package, or a method that involves subjecting a pre-carbonated beverage to heat sterilization, followed by packaging. To be more specific, when the carbonated beverage of this invention is made into such a packaged beverage as PET bottled beverage, paper-packed beverage, glass bottled beverage, or pouched beverage, the carbonated beverage can be subjected to FP or UHT sterilization in which the beverage is held for example at 65 to 130°C. preferably at 85 to 120°C, for 1 to 60 seconds. Heat sterilization may be performed for a period of from 10 to 40 minutes. Any sterilization process may be performed at an appropriate temperature for several seconds, such as 5 to 30 seconds, as long as such a process can achieve a comparable sterilizing value to that process conducted under the aforementioned conditions. When the carbonated beverage of this invention is made into a packaged beverage, a hot pack filling method or an aseptic filling method can be used.

### (Production method)

The carbonated beverage of the present invention can be produced by mixing the aforementioned components in appropriate amounts. During the process of production of the carbonated beverage of this invention, the order of mixing components is not particularly limited. The production method for the carbonated beverage of this invention can also comprise the steps of mixing the components and ingredients described above and adjusting their contents. Various parameters associated with the production of the carbonated beverage of this invention, such as the types and contents of the components contained in the beverage, are as described above in relation to the carbonated beverage of this invention or are obvious from the descriptions given above.

The production method for the carbonated beverage of the present invention may comprise the steps of introducing a carbon dioxide gas into a beverage and adjusting carbon dioxide gas pressure. The method for introducing a carbon dioxide gas, and the carbon dioxide gas pressure are as described above in relation to the carbonated beverage of this invention or are obvious from the descriptions given above. The production method for the carbonated beverage of this invention may comprise the step of adjusting the pH of the beverage. The pH of the beverage to be adjusted is also as described above.

Further, the production method for the carbonated beverage of the present invention may comprise, if necessary, the steps of sterilizing the beverage and packing the beverage in a package. By going through these steps, the carbonated beverage of this invention can be made into a packaged beverage. The methods and conditions for sterilizing and packaging the carbonated beverage of this invention are also as described above in relation to the carbonated beverage of this invention or are obvious from the descriptions given above.

### EXAMPLES

Hereunder, the present invention will be specifically described in detail by reference to experimental examples, but this invention is not limited to these examples. Unless otherwise stated herein, all numerical ranges are inclusive of their endpoints.

### (Experimental Example 1)

Different carbonated beverages were prepared using a commercially available orange flavorant (containing 2200 ppm of linalool and 190 ppm of n-octanal). To be specific, granulated sugar, citric acid (anhydrous), trisodium citrate, an orange flavorant, caffeine, and either an iso-α-acid or quassin were added sequentially to pure water, and the mixture was mixed with carbonated water to prepare carbonated beverages. A further carbonated beverage containing both an iso-α-acid and quassin was also prepared. The iso-α-acid used was an iso-α bitter acid (produced by John l. Haas, Inc.). As a source material for quassin, a Jamaica quassia extract containing quassin was used.

In this experiment, carbonated beverages were prepared by incorporating granulated sugar, citric acid (anhydrous), and an orange flavorant to give concentrations of 6.3% (w/v), 0.31% (w/v), and 0.05% (w/v), respectively (all concentrations were with respect to the carbonated beverages), and by adding trisodium citrate to give a pH of 3.1. The final concentrations of caffeine, an iso-α-acid, and quassin in the carbonated beverages are shown in the tables given below.

All of the prepared carbonated beverages had a Brix of 6.5, an acidity (in terms of citric acid) of 0.3 g/100 g, a pH of about 3.1, and a gas pressure of 2.8 kgf/cm² at a liquid temperature of 20°C. Next, the prepared carbonated beverages were packed in 350 mL PET bottles and sealed to produce packaged carbonated beverages.

The obtained packaged carbonated beverages were cooled to 5°C and then subjected to sensory evaluation. To be specific, three well-trained sensory panelists drunk the different carbonated beverages, and evaluated the refreshing sensations originating from an orange flavorant felt upon drinking and after 10 seconds from drinking, based on the following six-grade scale.
- 6 points: A remarkable refreshing sensation was felt.
- 5 points: A refreshing sensation was felt.
- 4 points: A slight refreshing sensation was felt.
- 3 points: Not sure whether a refreshing sensation was felt or not.
- 2 points: Little refreshing sensation was felt.
- 1 point: No refreshing sensation was felt.
The results are shown in the tables given below.

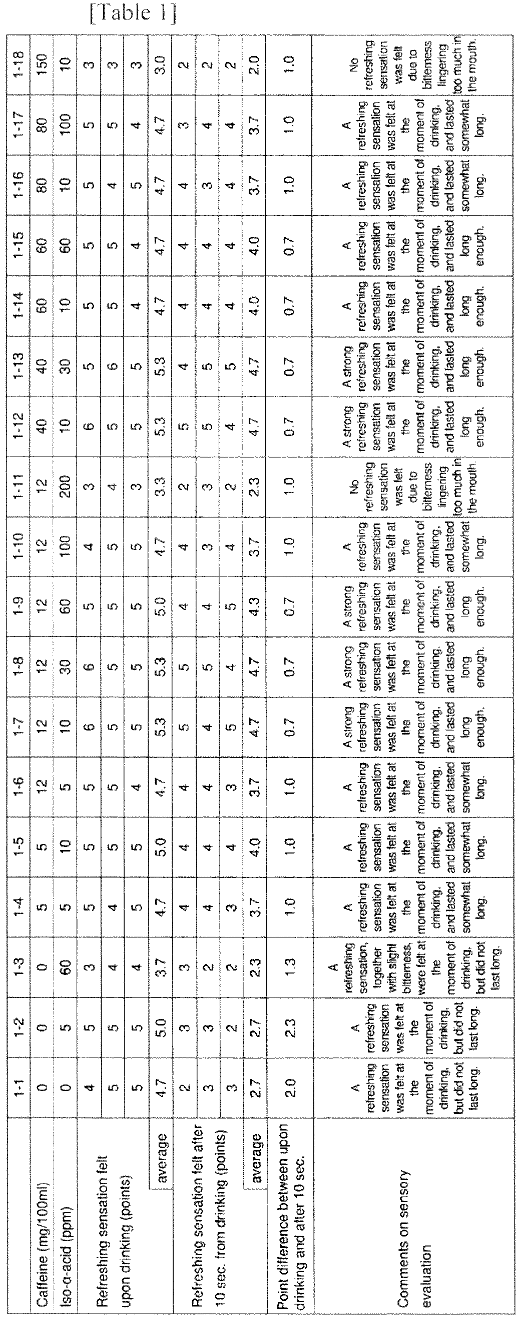

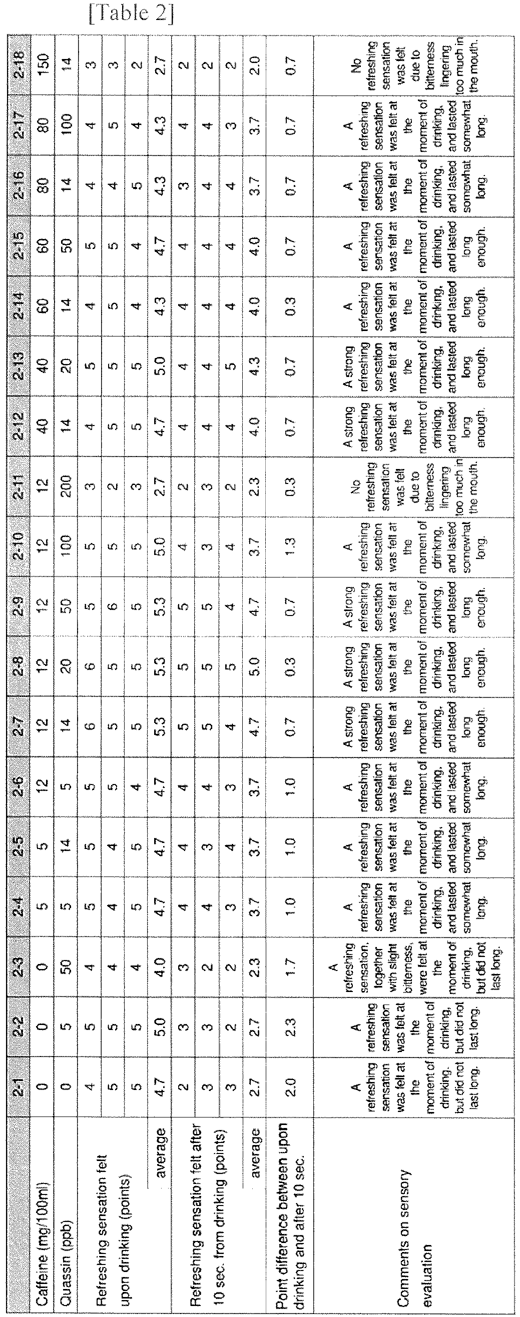

**[Table 3]**

| | | 1 | 2 |
|---|---|---|---|
| Caffeine (mg/100ml) | | 0 | 12 |
| Iso-α-acid (ppm) | | 0 | 10 |
| Quassin (ppb) | | 0 | 14 |
| Refreshing sensation felt upon drinking (points) | | 4 | 6 |
| | | 5 | 5 |
| | | 5 | 5 |
| | average | 4.7 | 5.3 |
| Refreshing sensation felt after 10 sec. from drinking (points) | | 2 | 6 |
| | | 3 | 4 |
| | | 3 | 5 |
| | average | 2.7 | 5.0 |
| Point difference between upon drinking and after 10 sec. | | 2.0 | 0.3 |
| Comments on sensory evaluation | | A refreshing sensation was felt at the moment of drinking, but did not last long. | A strong refreshing sensation was felt at the moment of drinking, and lasted long enough. |

As evident from the results given above, it was shown that when a combination of specified amounts of caffeine and an iso-α-acid, or a combination of specified amounts of caffeine and quassin, was mixed in carbonated beverages, a refreshing sensation originating from an orange flavorant was continuously felt after the carbonated beverages were drunk. These results suggested that combined use of specified amounts of caffeine and an iso-α-acid, or specified amounts of caffeine and quassin, allows carbonated beverages containing a linalool-containing flavorant to provide a continuous feeling of a refreshing sensation originating from said flavorant. Further, it was confirmed that also when a combination of a specified amount of caffeine with specified amounts of an iso-α-acid and quassin was used to prepare a carbonated beverage, a refreshing sensation originating from an orange flavorant was continuously felt after the carbonated beverage was drunk.

### (Experimental Example 2)

Different carbonated beverages prepared using different flavorants, *i.e*., a lemon flavorant (containing 18000 ppm of limonene and 530 ppm of a-terpineol), a grapefruit flavorant (containing 10000 ppm of limonene and 150 ppm of n-octanal), and a mixed fruit flavorant (containing 15000 ppm of ethyl butyrate, 1800 ppm of ethyl isovalerate, 1500 ppm of isoamyl acetate, and 900 ppm of isoamyl butyrate), were evaluated. The carbonated beverages were prepared by the same procedure as in Experimental Example 1 except that an orange flavorant was replaced with a lemon flavorant, a grapefruit flavorant, or a mixed fruit flavorant. The concentration of a lemon flavorant, a grapefruit flavorant, or a mixed fruit flavorant in the carbonated beverages was adjusted to 0.05% (w/v). The final concentrations of caffeine and an iso-α-acid or quassin in the carbonated beverages are as shown in the tables given below.

All of the prepared carbonated beverages had a Brix of 6.5, an acidity (in terms of citric acid) of 0.3 g/100 g, a pH of about 3.1, and a gas pressure of 2.8 kgf/cm² at a liquid temperature of 20°C. The carbonated beverages were packed by the same procedure as in Experimental Example 1 to produce packaged carbonated beverages.

Also in this experiment, the carbonated beverages were subjected to sensory evaluation by the same procedure as in Experimental Example 1. To be specific, by the same procedure as in Experimental Example 1, sensory evaluation was conducted on the refreshing sensations originating from each of the different flavorants felt upon drinking and after 10 seconds from drinking. The results are shown in the tables given below.

**[Table 4]**

| | | Lemon | | Grapefruit | | Mixed fruit | |
|---|---|---|---|---|---|---|---|
| | | 3-1 | 3-2 | 3-3 | 3-4 | 3-5 | 3-6 |
| Caffeine (mg/100ml) | | 0 | 12 | 0 | 12 | 0 | 12 |
| Iso-α-acid (ppm) | | 0 | 10 | 0 | 10 | 0 | 10 |
| Refreshing sensation felt upon drinking (points) | | 4 | 5 | 4 | 6 | 4 | 5 |
| | | 5 | 5 | 4 | 5 | 4 | 4 |
| | | 4 | 5 | 4 | 5 | 5 | 6 |
| | average | 4.3 | 5.0 | 4.0 | 5.3 | 4.3 | 5.0 |
| Refreshing sensation felt after 10 sec. from drinking (points) | | 3 | 4 | 3 | 5 | 3 | 4 |
| | | 2 | 4 | 2 | 4 | 3 | 4 |
| | | 3 | 5 | 2 | 5 | 3 | 5 |
| | average | 2.7 | 4.3 | 2.3 | 4.7 | 3.0 | 4.3 |
| Point difference between upon drinking and after 10 sec. | | 1.7 | 0.7 | 1.7 | 0.7 | 1.3 | 0.7 |
| Comments on sensory evaluation | | A refreshing sensation was felt at the moment of drinking, but did not last long. | A refreshing sensation was felt at the moment of drinking, and lasted long enough. | A refreshing sensation was felt at the moment of drinking, but did not last long. | A refreshing sensation was felt at the moment of drinking, and lasted long enough. | A refreshing sensation was felt at the moment of drinking, but did not last long. | A strong refreshing sensation was felt at the moment of drinking, and lasted long enough |

**[Table 5]**

| | | Lemon | | Grapefruit | | Mixed fruit | |
|---|---|---|---|---|---|---|---|
| | | 4-1 | 4-2 | | 4-4 | 4-5 | 4-6 |
| Caffeine (mg/100ml) | | 0 | 12 | 0 | 12 | 0 | 12 |
| Quassin (ppb) | | 0 | 14 | 0 | 14 | 0 | 14 |
| Refreshing sensation felt upon drinking (points) | | 4 | 5 | 5 | 5 | 4 | 5 |
| | | 4 | 5 | 4 | 5 | 5 | 5 |
| | | 4 | 4 | 4 | 5 | 5 | 6 |
| | average | 4.0 | 4.7 | 4.3 | 5.0 | 4.7 | 5.3 |
| Refreshing sensation felt after 10 sec. from drinking (points) | | 3 | 4 | 3 | 4 | 3 | 5 |
| | | 3 | 4 | 3 | 4 | 3 | 4 |
| | | 3 | 4 | 2 | 5 | 3 | 5 |
| | average | 3.0 | 4.0 | 2.7 | 4.3 | 3.0 | 4.7 |
| Point difference between upon drinking and after 10 sec. | | 1.0 | 0.7 | 1.7 | 0.7 | 1.7 | 0.7 |
| Comments on sensory evaluation | | A refreshing sensation was felt at the moment of drinking, but did not last long. | A refreshing sensation was felt at the moment of drinking, and lasted long enough. | A refreshing sensation was felt at the moment of drinking, but did not last long. | A refreshing sensation was felt at the moment of drinking, and lasted long enough. | A refreshing sensation was felt at the moment of drinking, but did not last long. | A strong refreshing sensation was felt at the moment of drinking, and lasted long enough. |

As evident from the results given above, it was shown that when a combination of specified amounts of caffeine and an iso-α-acid, or a combination of specified amounts of caffeine and quassin, was mixed in carbonated beverages containing any of a lemon flavorant, a grapefruit flavorant, and a mixed fruit flavorant, a refreshing sensation originating from any of the flavorants was continuously felt after the carbonated beverages were drunk. These results suggested that combined use of specified amounts of caffeine and an iso-α-acid, or specified amounts of caffeine and quassin, has a refreshing sensation sustaining effect on flavorants comprising at least one aroma component selected from the group consisting of linalool, limonene, α-terpineol, n-octanal, ethyl butyrate, ethyl isovalerate, isoamyl acetate and isoamyl butyrate.

## Claims

1. A flavorant-containing carbonated beverage comprising:
(a) 5 to 80 mg/100 mL of caffeine, and
(b) 5 to 100 ppm of an iso-α-acid and/or 5 to 100 ppb of quassin.

2. The carbonated beverage according to claim 1, wherein the flavorant comprises at least one component selected from the group consisting of linalool, limonene, α-terpineol, n-octanal, ethyl butyrate, ethyl isovalerate, isoamyl acetate and isoamyl butyrate.

3. The carbonated beverage according to claim 1 or 2, wherein the carbonated beverage has a caffeine conlent of 10 to 45 mg/100 mL.

4. The carbonated beverage according to any one of claims 1 to 3, wherein the carbonated beverage has an iso-α-acid content of 10 to 60 ppm.

5. The carbonated beverage according to any one of claims 1 to 4, wherein the carbonated beverage has a quassin content of 14 to 50 ppb.

6. The carbonated beverage according to any one of claims 1 to 5, wherein the carbonated beverage has an acidity of 0.02 to 1 g/100 g.

7. The carbonated beverage according to any one of claims 1 to 6, wherein the carbonated beverage has a Brix of 1 to 20.

8. The carbonated beverage according to any one of claims 1 to 7, further comprising 0.1 to 100 mg/100 mL of a mineral.

9. The carbonated beverage according to any one of claims 1 to 8, wherein the carbonated beverage is a packaged beverage.
